# EUROPEAN PATENT APPLICATION

(11) **EP 4 024 304 A1**
(43) Date of publication of application: **06.07.2022**
(21) Application number: 20857913.6
(22) Date of filing: 06.03.2020
(51) Int. Cl.: G06Q 10/10

(54) **SCHEDULING SYSTEM, SCHEDULING PROGRAM, SCHEDULING METHOD, AND STORAGE MEDIUM**

(30) Priority: 26.08.2019 JP 2019154098
(71) Applicant: Hitachi, Ltd., Tokyo 100-8280 (JP)
(72) Inventor: SANO, Kentaroh, Tokyo 100-8280 (JP); SUGIMURA, Kazuyuki, Tokyo 100-8280 (JP); BABA, Atsushi, Tokyo 100-8280 (JP); KUBOTA, Atsushi, Tokyo 100-8280 (JP); YOSHIUCHI, Hideya, Tokyo 100-8280 (JP); NAKAMURA, Ryosuke, Tokyo 100-8280 (JP); HASHIZUME, Jiro, Tokyo 100-8280 (JP)
(74) Representative: Mewburn Ellis LLP
(86) International application number: PCT/JP2020/009597
(87) International publication number: WO 2021/038928

(57) **Abstract**

The present invention is provided with: a schedule information storage unit (21) that stores schedule information of at least one of a user, an apparatus, and a facility; an information acquisition unit (22) that acquires information indicating that the schedule of at least one of the user, the apparatus, and the facility stored in the schedule information storage unit (21) are likely to be changed in the future; a solution determination unit (23) that, when the information acquisition unit (22) has acquired the information, extracts a problem likely to be caused by the change of the schedule in the future, refers to the schedule information regarding the schedule of at least one of the user, the apparatus, and the facility which is to be a related party being related to a solution to solve the problem, and determines a solution to cope with the problem by changing the schedule of the related party; and a change unit (26) that changes the schedule information according to the solution.

## Description

### Technical Field

The present invention relates to a scheduling system, a scheduling program, a scheduling method, and a storage medium.

### Background Art

A background technology of a technical field of the present invention is disclosed in Japanese Unexamined Patent Application Publication No. 2006-285784 (Patent Literature 1). In this publication, it is stated that "A job is accepted, and an occupancy time of a device including a usage period of the device managed by a device schedule unit and a manual work period by a worker is calculated. From working hours of the worker managed by an operator scheduler and the occupancy time of the device, the number of workers who can work in a predetermined time block is calculated. From the manual work period included in the occupancy time of the one or more devices, the number of overlapping manual tasks in the predetermined time block is calculated. According to the number of workers and the number of overlapping manual tasks, the usage period of the device is shifted. According to the usage period of the device assigned by the device schedule unit, the number of workers, and the number of overlapping manual tasks, the working hours of the worker are updated" (see Abstract).

Another background technology is disclosed in Japanese Unexamined Patent Application Publication No. 2015-138501 (Patent Literature 2). In this publication, it is stated that "An operation planning support apparatus according to an embodiment includes a travel-time-predicted-value calculation unit that calculates, based on a provisional schedule, a predicted value of travel time of an electric vehicle. The operation planning support apparatus also includes a power-consumption-predicted-value calculation unit that calculates, based on the provisional schedule, a predicted value of electric energy consumed by a travel of the electric vehicle. The operation planning support apparatus also includes a charging-time-predicted-value calculation unit that calculates, based on the provisional schedule, a predicted value of charging time required to charge a storage battery of the electric vehicle at a charging stand. In addition, the operation planning support apparatus includes an evaluation date output unit that outputs values obtained by adding variations in predicted values depending on a time block, a day of the week, a season or the like as prediction results from individual calculation units" (see Abstract).

Another background technology is disclosed in Japanese Unexamined Patent Application Publication No. 2015-149063 (Patent Literature 3). In this publication, it is stated that "An electronic calendar illustrates time progression of scheduled tasks in a horizontal or vertical view of time. The electronic calendar and a graphical user interface (GUI) thereof provide a viewing pattern for a user. A direction of the viewing pattern is synonymous with a date-time increasing/decreasing in the time progression of the scheduled tasks. A rescheduling engine schedules, on the calendar, tasks requested by the user and automatically reschedules conflicting tasks. The rescheduling engine also schedules user selected resources (such as workers, robots, and tools) per scheduled task" (see Abstract).

Another background technology is disclosed in Japanese Unexamined Patent Application Publication No. 2017-117294 (Patent Literature 4). In this publication, it is stated that "An examination schedule holding unit is configured to hold examination schedule information on a plurality of endoscopic examinations. When the examination schedule information is changed due to rescheduling processing, a change content acquisition unit is configured to acquire a change content of the examination schedule information. A notification destination specification unit is configured to specify, based on the change content acquired by the change content acquisition unit, a notification destination of the change content. A notification timing determination unit is configured to determine, based on the specified notification destination, a timing of notifying the change content. A notification processing unit is configured to notify the specified notification destination of the change content of the examination schedule information with the determined timing" (see Abstract).

### Citation List

### Patent Literature

Patent Literature 1: Japanese Unexamined Patent Application Publication No. 2006-285784
Patent Literature 2: Japanese Unexamined Patent Application Publication No. 2015-138501
Patent Literature 3: Japanese Unexamined Patent Application Publication No. 2015-149063
Patent Literature 4: Japanese Unexamined Patent Application Publication No. 2017-117294

### Summary of Invention

### Technical Problem

Patent Literatures 1 to 4 mentioned above disclose the technology related to the schedule production method, the technology in which, since a new schedule is suggested against the existing schedule, the schedule is changed, and the like.

However, none of Patent Literatures 1 to 4 has made a suggestion about countermeasures in a case where an event that forces a given user to change an existing future schedule occurs.

It is therefore a task of the present invention to provide a scheduling system, a scheduling program, a scheduling method, and a storage medium which responds to a case where an event that forces a given user to change an existing future schedule occurs.

### Solution to Problem

To solve the problem described above, an aspect of the present invention is a scheduling system including: a schedule information storage unit that stores at least one schedule information item among a user, a device, and equipment; an information acquisition unit that acquires information indicating that a schedule of at least one of the user, the device, and the equipment stored in the schedule information storage unit has a possibility of being changed in future; a solution determination unit that extracts, when the information is acquired by the information acquisition unit, a problem caused by a future change in the schedule, refers to the schedule information for the schedule of at least one of the user, the device, and the equipment which is to serve as a related party related to a solution to solve the problem, and determines a solution to successfully cope with the problem by changing the schedule of the related party; a suggestion unit that suggests, to the user serving as the related party, the determination made by the solution determination unit; a reception unit that receives, from the user, approval of the suggestion made by the suggestion unit; and a change unit that changes, when the approval is received by the reception unit, the schedule information based on the solution.

Another aspect of the present invention is a scheduling program for causing a computer to execute: an information acquisition process of acquiring information indicating that a schedule of at least one of a user, a device, and equipment stored in a schedule information storage unit storing at least one schedule information item among the user, the device, and the equipment has a possibility of being changed in future; a solution determination process of extracting, when the information is acquired in the information acquisition process, a problem caused by a future change in the schedule, referring to the schedule information for the schedule of at least one of the user, the device, and the equipment which is to serve as a related party related to a solution to solve the problem, and determining a solution to successfully cope with the problem by changing the schedule of the related party; a suggestion process of suggesting, to the user serving as the related party, the determination made in the solution determination process; a reception process of receiving, from the user, approval of the suggestion made in the suggestion process; and a change process of changing, when the approval is received in the reception process, the schedule information based on the solution.

Still another aspect of the present invention is a scheduling method including: an information acquisition step of acquiring information indicating that a schedule of at least one of a user, a device, and equipment stored in a schedule information storage unit storing at least one schedule information item among the user, the device, and the equipment has a possibility of being changed in future; a solution determination step of extracting, when the information is acquired in the information acquisition step, a problem caused by a future change in the schedule, referring to the schedule information for the schedule of at least one of the user, the device, and the equipment which is to serve as a related party related to a solution to solve the problem, and determining a solution to successfully cope with the problem by changing the schedule of the related party; a suggestion step of suggesting, to the user serving as the related party, the determination made in the solution determination step; a reception step of receiving, from the user, approval of the suggestion made in the suggestion step; and a change step of changing, when the approval is received in the reception step, the schedule information stored in the schedule information storage unit based on the solution.

Yet another aspect of the present invention is a computer readable storage medium storing a scheduling program for causing a computer to execute: an information acquisition process of acquiring information indicating that a schedule of at least one of a user, a device, and equipment stored in a schedule information storage unit storing at least one schedule information item among the user, the device, and the equipment has a possibility of being changed in future; a solution determination process of extracting, when the information is acquired in the information acquisition process, a problem caused by a future change in the schedule, referring to the schedule information for the schedule of at least one of the user, the device, and the equipment which is to serve as a related party related to a solution to solve the problem, and determining a solution to successfully cope with the problem by changing the schedule of the related party; a suggestion process of suggesting, to the user serving as the related party, the determination made in the solution determination process; a reception process of receiving, from the user, approval of the suggestion made in the suggestion process; and a change process of changing, when the approval is received in the reception process, the schedule information based on the solution.

### Advantageous Effect of Invention

According to the present invention, it is possible to provide a scheduling system, a scheduling program, a scheduling method, and a storage medium which respond to a case where an event that forces a given user to change an existing future schedule occurs.

Problems, configurations, and effects other than those described above will be made apparent by the following description of an embodiment.

### Brief Description of Drawings

Fig. 1 is a block diagram illustrating a network configuration centered on a scheduling system according to an embodiment of the present invention;
Fig. 2 is a block diagram illustrating a system configuration of the scheduling system according to the embodiment of the present invention;
Fig. 3 is a block diagram illustrating a system configuration of a terminal device according to the embodiment of the present invention;
Fig. 4 is a functional block diagram of the scheduling system according to the embodiment of the present invention;
Fig. 5A is a flow chart illustrating an operation of the scheduling system according to the embodiment of the present invention;
Fig. 5B is a flow chart illustrating the operation of the scheduling system according to the embodiment of the present invention;
Fig. 5C is a flow chart illustrating the operation of the scheduling system according to the embodiment of the present invention;
Fig. 6 is a flow chart illustrating the operation of the scheduling system according to the embodiment of the present invention;
Fig. 7 is a flow chart illustrating the operation of the scheduling system according to the embodiment of the present invention;
Fig. 8 is a conceptual diagram of schedule information illustrating Specific Example 1 of the scheduling system according to the embodiment of the present invention;
Fig. 9 is a conceptual diagram of schedule information illustrating Specific Example 1 of the scheduling system according to the embodiment of the present invention;
Fig. 10 is a plan view illustrating an example of screen display when a user is requested for manual schedule adjustment in S16 in a terminal device according to the embodiment of the present invention;
Fig. 11 is a plan view illustrating an example of screen display of an example of an enlarged search range which is displayed when an enlargement button for a search range is operated in the terminal device according to the embodiment of the present invention;
Fig. 12 is a conceptual diagram of schedule information illustrating Specific Example 2 of the scheduling system according to the embodiment of the present invention;
Fig. 13 is a conceptual diagram of the schedule information illustrating Specific Example 2 of the scheduling system according to the embodiment of the present invention;
Fig. 14 is a conceptual diagram of schedule information illustrating Specific Example 3 of the scheduling system according to the embodiment of the present invention;
Fig. 15 is a conceptual diagram of the schedule information illustrating Specific Example 3 of the scheduling system according to the embodiment of the present invention;
Fig. 16 is a conceptual diagram of schedule information illustrating Specific Example 4 of the scheduling system according to the embodiment of the present invention;
Fig. 17 is a conceptual diagram of the schedule information illustrating Specific Example 4 of the scheduling system according to the embodiment of the present invention; and
Fig. 18 is a functional block diagram illustrating details of a solution determination unit of the scheduling system according to the embodiment of the present invention.

### Description of Embodiments

Referring to the drawings, a description will be given below of an embodiment of the present invention.

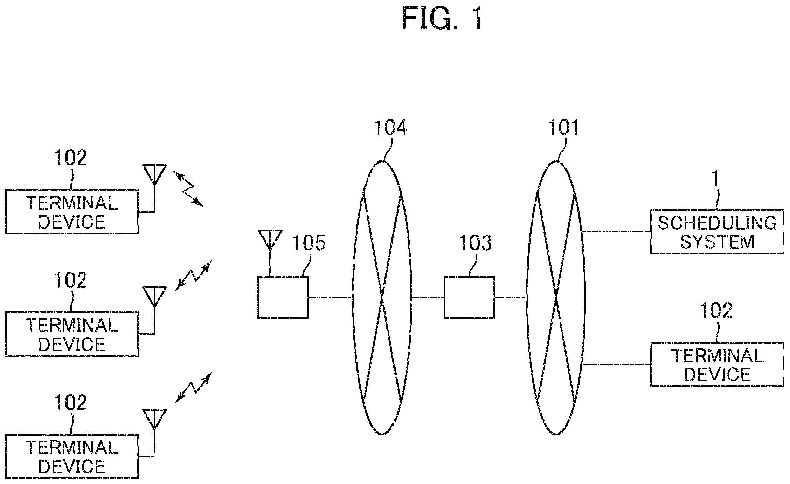

Fig. 1 is a block diagram illustrating a network configuration centered on a scheduling system according to the present embodiment. A scheduling system 1 is a server device connected to a network such as, e.g., an Internet 101. A user of the scheduling system 1 uses a terminal device 102 thereof to be able to perform communication with the scheduling system 1 via the internet 101 As the terminal device 102, any of various information terminal devices such as a smartphone, a tablet, and a personal computer can be used. When the terminal device 102 is the smartphone or the like, the terminal device 102 performs communication with the scheduling system 1 via a base station 105 of a mobile communication network 104 connected to the internet 101 via a gateway 103. Needless to say, the terminal device 102 can also perform communication with the schedule system 1 on the Internet 101 without using the mobile communication network 104. When the terminal device 102 is the tablet or the personal computer, the terminal device 102 can perform communication with the scheduling system 1 on the Internet 101 without using the mobile communication network 104. Needless to say, the terminal device 102 can also perform communication with the scheduling system 1 via the mobile communication network 104 by using a wireless wi-fi (registered trademark) device.

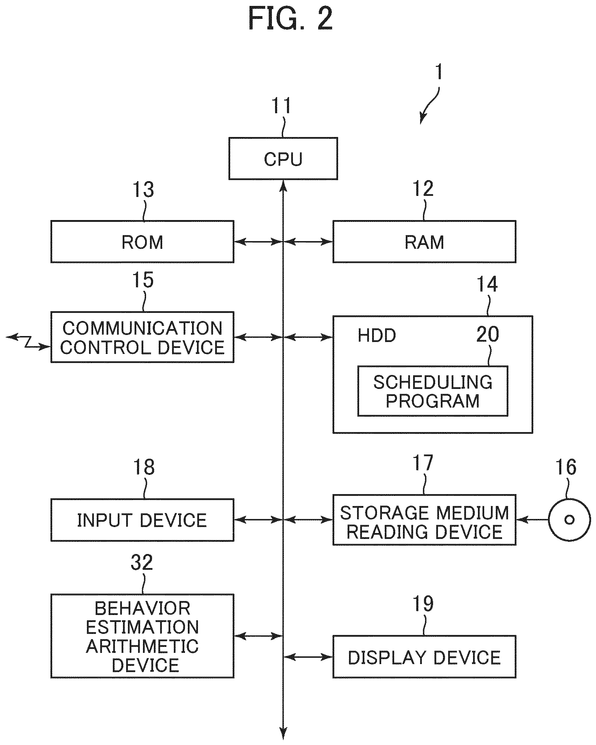

Fig. 2 is a block diagram illustrating a system configuration of the scheduling system 1. The scheduling system 1 includes a CPU (Central Processing Unit) 11 that performs various arithmetic operations to intensively control each of components of the scheduling system 1. The CPU 11 is connected to a RAM (Random Access Memory) 12 serving as a work area of the CPU 11, to a ROM 13 storing a BIOS (Basic Input Output System) or the like, and to a magnetic storage device (HDD) 14 that is a nonvolatile storage device storing various data. The CPU 11 is also connected to a communication control device 15 for performing communication with the Internet 101 or the like and to a storage medium reading device 17 such as an optical disc device that reads data from a storage medium 16 that is one of various media such as a DVD (Digital Versatile Disc) and a CD (Compact Disc) . The CPU 11 is further connected to an input device 18 such as a keyboard or a mouse, a display device 19 such as a liquid crystal display or an organic EL display, and a behavior estimation arithmetic device 32 such as a graphic card or a TPU. In the magnetic storage device 14, a scheduling program 20 is set up. The scheduling program 20 may be downloaded from the Internet or the like 101 and set up in the magnetic storage device 14, or may also be read from the storage medium 16 by the storage medium reading device 17 and set up in the magnetic storage device 14. Note that, in the example described above, the behavior estimation arithmetic device 32 is provided in the scheduling system 1, but the present invention is not limited thereto. It may also be possible that a device having a function equivalent to that of the behavior estimation arithmetic device 32 is connected as, e.g., another home device, a cloud on the Internet 101, or the like to the Internet 101 outside the scheduling system 1. Alternatively, it may also be possible that a function of the behavior estimation arithmetic device 32 is performed by the scheduling program 20.

In Fig. 2, for the sake of convenience, the scheduling system 1 is illustrated as one server device. However, the scheduling system 1 may also be implemented as a plurality of server devices on the Internet 101 which operate in collaboration with each other. In that case, the scheduling program 20 illustrated as a data set in Fig. 2 also becomes an aggregate of a group of programs dispersively set up in the plurality of individual server devices. In that case, the storage medium 16 also becomes an aggregate of a group of storage media including storage media corresponding to the individual server devices.

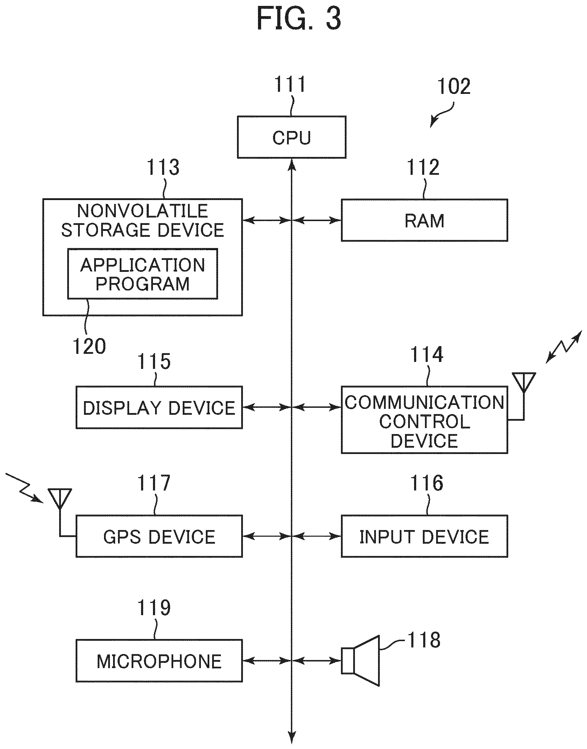

Fig. 3 is a block diagram illustrating a system configuration of the terminal device 102. By way of example, the terminal device 102 is a smart phone. The terminal device 102 includes a CPU 111 that intensively controls each of components of the terminal device 102. The CPU 111 includes a RAM 112 serving as a work area of the CPU 111, a semiconductor storage device or a magnetic storage device, and the like, and is connected to a nonvolatile storage device 113 that stores various data and to a communication control device 114 that performs communication with the mobile communication network 104 or the like. The CPU 111 is also connected to a display device 115 such as a liquid crystal display or an organic EL display, to an input device 116 such as a button or a touch panel, to a GPS (Global Positioning System) device 117 that detects a current position of the terminal device 102, to a speaker 118, and to a microphone 119. In the nonvolatile storage device 113, a predetermined application program 120 is set up.

Note that Patent Literatures 1 to 4 mentioned above disclose the technology related to the schedule production method, the technology in which, since a new schedule is suggested against an existing schedule, the schedules are changed, and the like.

However, none of Patent Literatures 1 to 4 has made a suggestion about countermeasures in a case where an event that forces a given user to change an existing future schedule occurs (each of Patent Literatures 1 to 4 is related to a case where a user has changed an existing schedule).

With regard to this, in Japanese Unexamined Patent Application Publication No. H8-518591, it is stated that, in a case where a system that searches for, when a user who wishes to go to a destination specifies a time and a place, an optimum route to the destination and a stop-off on the way to the destination and produces a driving schedule receives traffic jam information or bad weather information, the schedule is set again.

However, in the technology in the publication, a problem is solved when the schedule of the user is set again, but a case where the problem cannot be solved by merely changing the schedule of the user is not mentioned.

In the present embodiment, when a given event occurs (is observed) and a future schedule of a given user is forced to be changed, to solve a problem caused by the event, a schedule of another user, another device, or the like is changed to solve the problem.

A general flow of a means to be implemented by the scheduling system 1 in order to solve the problem described above is as described in the following (1) to (7).
(1) For example, respective schedules of a plurality of users, a plurality of devices, and the like on the day are registered.
(2) Information on an event which forces the future schedule of the user of concern to be changed is acquired.
(3) A problem encountered by the user due to the event is extracted.
   An image of the problem encountered herein is as follows: the business meeting attended by a mother as the user is elongated, and the user cannot pick up her child from kindergarten (priorities concern), a hotel can neither pick up a booked guest whose flight was delayed nor arrange a meal for the guest (the user in this case is the hotel), or it is found that a conference room for ten people cannot be reserved, and ten people who rarely come together cannot have a conference (the user in this case is an organizer of the conference).
(4) Solutions to the problem are determined. Specifically, the schedules of the other users, the other devices, and the like are retrieved.
(5) The solutions are presented to the user (who is the mother, the hotel, or the organizer in the examples shown above), and the user is requested to select among the solutions.
(6) Approval is received from the other users, the other devices, and the like (in the case of the devices or the like, the devices or the like are rescheduled, rather than giving approval).
(7) A method of producing schedules for the users, the devices and the like is implemented by manual inputting, automatic setting performed by the scheduling system 1, schedule preparation based on behavior estimation.

Referring to a functional block diagram, a flow chart, and the like, a detailed description will be given below of the general flow described above.

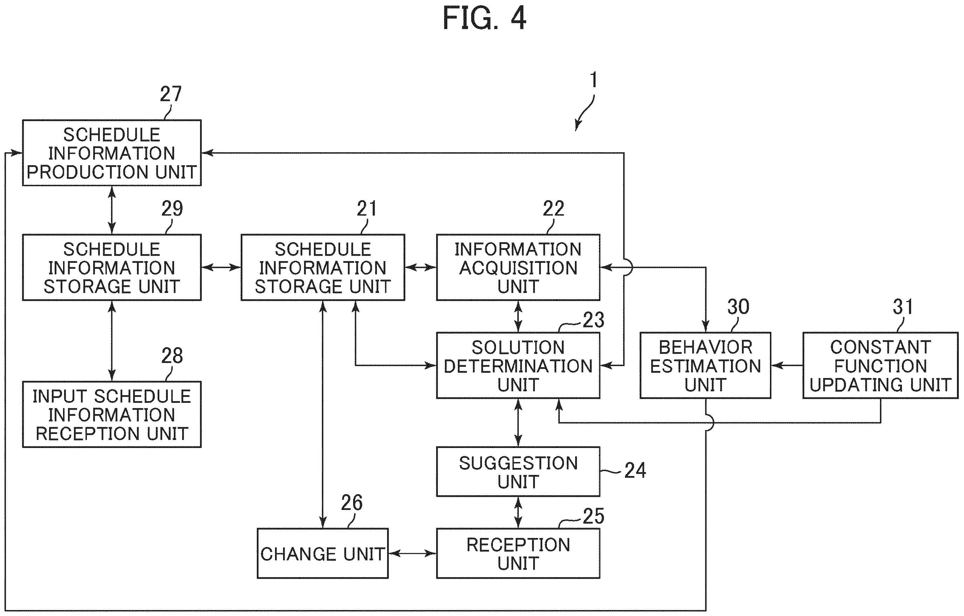

Fig. 4 is a functional block diagram of the scheduling system 1. The functional block diagram illustrates details of processing to be executed by the scheduling system 1 based on the scheduling program 20.

The scheduling system 1 is a system that manages schedules of users thereof, various devices, and equipment.

The scheduling system 1 includes a schedule information storage unit 21, an information acquisition unit 22, a solution determination unit 23, a suggestion unit 24, a reception unit 25, a change unit 26, a schedule information production unit 27, an input schedule information reception unit 28, a schedule information recording unit 29, a behavior estimation unit 30, and a constant function updating unit 31. Note that the scheduling system 1 need not necessarily include all the functional units mentioned above as long as functions thereof can be performed.

### <Portion Corresponding to General Flow (1)>

The schedule information storage unit 21 is a database that stores schedule information in which schedules of the users of the scheduling system 1 and the various devices and equipment managed by the scheduling system 1 are recorded, and is built in the magnetic storage device 14. References referred to when priorities of the individual schedules and a method of changing schedulers are also stored in the schedule information storage unit 21.

The schedule information production unit 27 acquires the behaviors of the users estimated by the behavior estimation unit 30 and the operations of the devices and the use status of the equipment each estimated by the behavior estimation unit 30 and thereby produces the schedule information to be stored in the schedule information storage unit 21.

In this case, the behavior estimation unit 30 may also estimate the behaviors of the users, the operations of the devices, and the like based on a previous history of the schedule information stored in the schedule information storage unit 21.

Note that the behavior estimation unit 30 may also analyze collected data by a method using statistics, such as machine learning, and extensively use a result of the analysis for the estimation. For example, the behavior estimation unit 30 may also analyze previous history data by using a recurrent neural network of deep learning and estimate a future state. Additionally, the behavior estimation unit 30 may also combine a plurality of analysis methods and use the combined analysis methods for the estimation.

The input schedule information reception unit 28 receives the schedule information input thereto from the terminal device 102 of each of the users to be stored in the schedule information storage unit 21.

The schedule information recording unit 29 records, in the schedule information storage unit 21, the schedule information produced by the schedule information production unit 27 or received by the input schedule information reception unit 28. Note that the scheduling system 1 may also include only one of the schedule information production unit 27 and the input schedule information reception unit 28.

### <Portion Corresponding to General Flow (2)>

The information acquisition unit 22 uses various means to acquire information indicating that the schedule of one of the users stored in the schedule information storage unit 21 has a possibility of being changed in the future. A source of the acquired information is a request for a change in data in the schedule information storage unit 21, the behavior estimation unit 30, the Internet 101, a sensor, or the like.

### <Portion Corresponding to General Flow (3)>

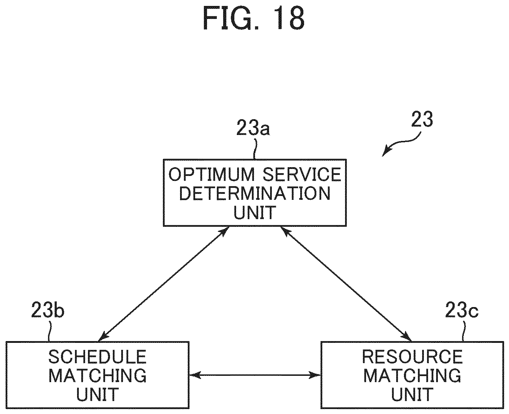

Fig. 18 is a functional block diagram illustrating details of the solution determination unit. The solution determination unit 23 extracts, when the information acquisition unit 22 acquires such information, a problem caused by a future change in the schedules recorded in the schedule information storage unit 21. A schedule matching unit 23b compares the information acquired by the information acquisition unit 22 to a portion of the schedules stored in the schedule information storage unit 21 which corresponds to the information. When the information overlaps the corresponding portion of the schedules, the problem is extracted by schedule matching.

### <Portion Corresponding to General Flow (4)>

Then, a resource matching unit 23c of the solution determination unit 23 refers to the schedule information in the schedule information storage unit 21 for the schedule of the user, the device, or the equipment which is to serve as a related party related to a solution to solve the problem, suggests solutions to successfully cope with the problem by changing the schedule of the related party, and an optimum service determination unit 23a considers the priorities of the schedules, preferences of the user, and the like and determines a candidate to be suggested as the solution to the user. It may be possible to determine only one solution or a plurality of solutions.

### <Portion Corresponding to General Flow (5)>

The suggestion unit 24 suggests, to the user, the candidate to be suggested as the solution determined by the solution determination unit 23 to the user. Specifically, the suggestion unit 24 transmits details of the solution determined by the solution determination unit 23 to the terminal device 102 of the user. Data exchange between the scheduling system 1 and the terminal device 102 and processing on the terminal device 102 side such as image display on the display device 115 based on the data exchange and reception of an input by the input device 116 is performed based on the application program 120.

The reception unit 25 receives a notification of approval of the suggestion made by the suggestion unit 24 from the terminal device 102 of the user.

### <Portion Corresponding to General Flow (6)>

Subsequently, the suggestion unit 24 requires (requests) the user serving as the related party to approve the solution approved by the user. Specifically, the suggestion unit 24 transmits, to the terminal device 102 of the user serving as the related party, details of the solution approved by the user. Data exchange between the scheduling system 1 and the terminal device 102 and processing on the terminal device 102 side such as image display on the display device 115 based on the data exchange and reception of an input by the input device 116 is performed based on the application program 120.

The reception unit 25 receives a notification of approval of the requirement (request) made by the suggestion unit 24 from the terminal device 102 of the user serving as the related party.

### <Portion Corresponding to General Flow (7)>

When the reception unit 25 also receives approval from the user serving as the related party, the change unit 26 changes the schedule information stored in the schedule information storage unit 21 based on the suggested solution.

The constant function updating unit 31 updates, based on the information stored in the information acquisition unit 22 and the schedule information recording unit 29, the functions of the individual components of the solution determination unit 23 and the behavior estimation unit 30. For example, by referring to the service previously used by the same user, the optimum service determination unit 23a of the solution determination unit 23 more easily determines a service suiting the preferences of the user. By referring to the item previously matched by the user, the resource matching unit 23c easily obtains a matching result highly satisfactory to the user. By following the matching policy previously used by the same user, the schedule matching unit 23b more easily obtains a matching result having a high affinity for a behavior tendency of the user. The behavior estimation unit 30 may also use machine learning and, as an amount of data used for learning is larger, a more accurate operation is possible.

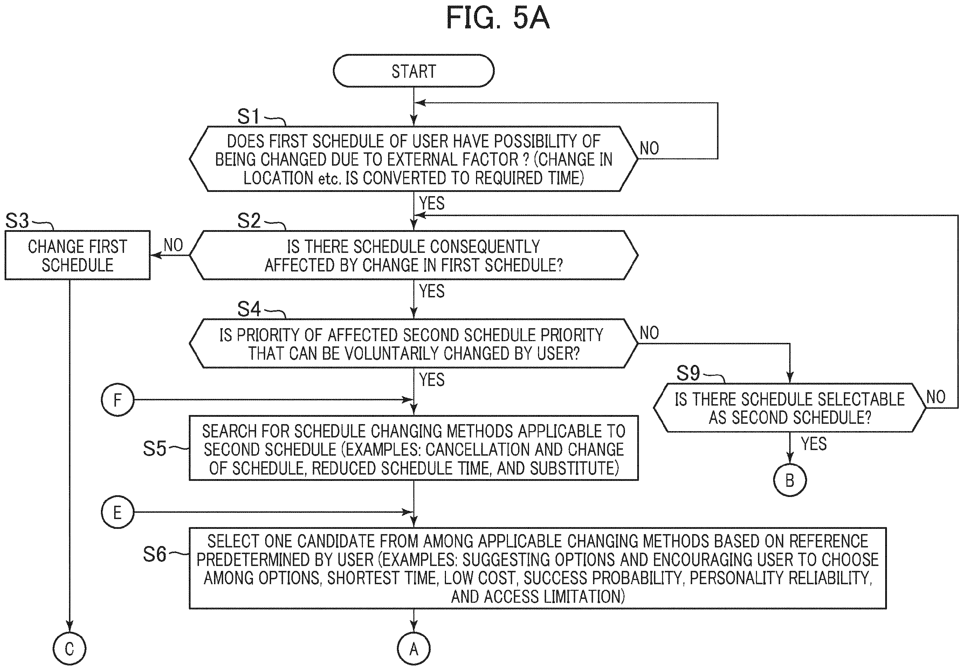

Figs. 5A, 5B, 5C, 6, and 7 are flow charts illustrating an operation of the scheduling system 1. The processing illustrated in these flow charts is executed by the CPU 11 of the scheduling system 1 based on the scheduling program 20. Such processing is intended to implement a scheduling method of the present invention.

### <Portion Corresponding to General Flow (1)>

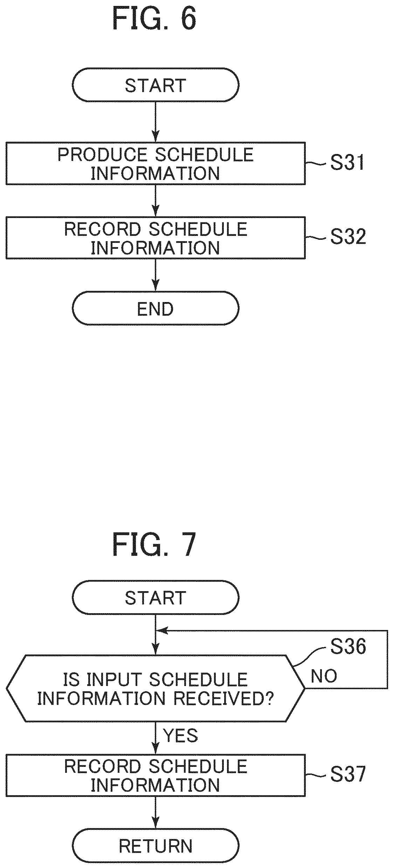

First, information is recorded in the schedule information in the schedule information storage unit 21. The processing in Figs. 6 and 7 relates to processing of recording information in the schedule information in the schedule information storage unit 21.

A description will be given of the processing in Fig. 6. The schedule information production unit 27 receives a result of estimation of at least one of the behavior of the user, the operation of the device, and the use status of the equipment by the behavior estimation unit 30 and produces the schedule information to be stored in the schedule information storage unit 21 (S31) (a schedule information production process or schedule information production step). In this case, the behavior estimation unit 30 estimates the behavior of the user, the operation of the device, the use status of the equipment based on the previous history of the schedule information stored in the schedule information storage unit 21 or on the information acquired by the information acquisition unit 22.

Next, the schedule information recording unit 29 records, in the schedule information storage unit 21, the schedule information received from the schedule information production unit 27 (S32) (a schedule information recording process or schedule information recording step). Thus, the processing in Fig. 6 is ended.

A description will be given of processing in Fig. 7. First, the input schedule information reception unit 28 receives the schedule information input thereto from the terminal device 102 of the user to be stored in the schedule information storage unit 21

(Yes in S36) (an input schedule information reception process or input schedule information reception step). Then, the schedule information recording unit 29 records, in the schedule information storage unit 21, the schedule information received from the input schedule information reception unit 28 (S37) (the input schedule information reception process or input schedule information reception step). Thus, the processing in Fig. 7 is ended. Note that the scheduling system 1 may be configured to be able to execute the processing in each of Figs. 6 and 7 or may also configured to execute the processing in only one of Figs. 6 and 7.

### <Portion Corresponding to General Flow (2)>

The information acquisition unit 22 of the scheduling system 1 determines whether or not information indicating that the schedule of one of the users stored in the schedule information storage unit 21 has a possibility of being changed in the future is acquired. Specifically, first, the information acquisition unit 22 determines whether or not a first schedule as the schedule of the user already stored in the schedule information storage unit 21 has a possibility of being changed due to an external factor (whether or not a real behavior is exactly as scheduled) (S1). Alternatively, it may also be possible that, even when the first schedule is not directly changed, a result of the estimation by the behavior estimation unit 30 is sent to the information acquisition unit 22, and the information acquisition unit 22 determines whether or not the first schedule has a possibility of being changed (S1). In this case, a change in a position or the like of the user or the like may also be converted to a time required by the change, which is subjected to determination. When such a change is made (Yes in S1), the schedule matching unit 23b of the solution determination unit 23 assumes that there is a change in the first schedule, and determines whether or not a schedule to be affected thereby is stored in the schedule information storage unit 21 (S2). When there is no such a schedule (No in S2), the information acquisition unit 22 changes the first schedule stored in the schedule information storage unit 21 (S3). When there is such a schedule (Yes in S2), it follows that the information indicating that the schedule of the user has a possibility of being changed in the future is acquired (an information acquisition process or information acquisition step), and the flow shifts to the processing including and subsequent to S4.

### <Portion Corresponding to General Flow (3)>

In the processing including and subsequent to S4, the schedule matching unit 23b of the solution determination unit 23 extracts the problem caused by a future change in the schedule. Then, the resource matching unit 23c of the solution determination unit 23 refers to the schedule information in the schedule information storage unit 21 for the schedule of the user, the device, or the equipment which is to serve as the related party related to a solution to solve the problem. Then, the resource matching unit 23c of the solution determination unit 23 suggests, based on the reference, the solution to successfully cope with the problem described above by changing the schedule of the related party, and the optimum service determination unit 23a determines, as the solution, the candidate to be suggested to the user (the foregoing is a solution determination process or solution determination step).

As such a solution determination process or solution determination step, e.g., the processing in S4 to S12 is executed. First, the solution determination unit 23 determines whether or not the priority of a schedule (second schedule) recognized to be affected by Yes in S2 is a priority that can be changed voluntarily by the user (S4).

### <Portion Corresponding to General Flow (4)>

When the priority is changeable (Yes in S4), the solution determination unit 23 searches for a schedule changing method applicable to the second schedule by using various means (S5). An example of the storing means may preliminarily define a table that allocates the applicable schedule changing method depending on the priority of the schedule and refer to the table. Examples of the schedule changing method include cancellation and change of the schedule, a reduced schedule time, a substitute, and the like.

### <Portion Corresponding to General Flow (5)>

Next, the optimum service determination unit 23a of the solution determination unit 23 selects one candidate from among the applicable changing methods based on a reference predetermined by the user (S6). Specific examples include suggesting options and encouraging the user to select among the options, selecting the applicable changing method that takes a shortest time, selecting the applicable changing method featuring lowest cost, selecting the applicable changing method having a highest success probability, selecting the applicable changing method featuring a high personality reliability, and selecting the applicable changing method based on the presence or absence of an access authority. Then, the optimum service determination unit 23a of the solution determination unit 23 determines whether or not there are one or more candidates for the changing method (S23). When there are one or more candidates (Yes in S23), the flow advances to S7 and, when there is no candidate (No in S23), the flow advances to S16. Then, the solution determination unit 23 searches for another related schedule that may be affected by the change in the second schedule for each of the devices, equipment, individuals, and organizations that has the second schedule as the related schedule by using the various means (S7). An example of the searching means may also give attributes indicating relationships such as a family member, a company, and a friend to the schedules and preferentially searches for the schedule having the same attribute. Then, the solution determination unit 23 determines whether or not all the related schedules that may be affected retrieved in S7 are changeable (S8).

When al the related schedules are changeable (Yes in S8), the solution determination unit 23 shifts to S13. Meanwhile, when the priority is not changeable in S4 described above (No in S4), the solution determination unit 23 determines whether or not there is another schedule selectable as the second schedule (S9). When there is another selectable schedule (Yes in S9), the solution determination unit 23 performs the processing including and subsequent to S2 described above for the selectable second schedule. Alternatively, when all the related schedules are unchangeable in S8 described above (No in S8), the solution determination unit 23 determines whether or not the unchangeable related schedules include the related schedule that can be excluded from adjustment targets when consideration is given to the priority of the user (S10) . When there is no other selectable schedule in S9 described above (No in S9) and when there is no related schedule that can be excluded from the adjustment targets in S10 described above (No in S10), the solution determination unit 23 shifts to S11. In S11, the solution determination unit 23 determines whether or not a range in which the schedule affected in S2 is to be extracted can be enlarged. When the extraction range can be enlarged (Yes in S11), the solution determination unit 23 enlarges the range in which the schedule is to be extracted (S12). Then, the solution determination unit 23 executes the processing including and subsequent to S5 described above based on the enlarged second schedule. When the extraction range cannot be enlarged (No in S11), the solution determination unit 23 excludes the selected changing method from candidates (S24), and shifts to S6.

### <Portion Corresponding to General Flow (6)>

When all the related schedules are changeable in S8 described above, the suggestion unit 24 transmits the determination made by the solution determination unit 23 to the terminal device 102 of the user serving as the related party to make a suggestion to the user (S13) (a suggestion process or suggestion step).

Next, the reception unit 25 receives approval of the suggestion made by the suggestion unit 24 from the terminal device 102 of the user (Yes in S14) (a reception process or reception step).

### <Portion Corresponding to General Flow (7)>

Next, when the approval is received by the reception unit 25 (Yes in S14), the change unit 26 determines whether or not all the related schedule information items are the schedules of the user (S17). When all the related schedule information items are the schedules of the user (Yes in S17), the change unit 26 changes the corresponding first, second, and related schedule information in the schedule information storage unit 21 based on the solution described above (S15) (a change process or change step).

Then, the change unit 26 notifies the terminal device 102 of the user of the completion of the change of the corresponding first, second, and related schedule information and a result of the change (S20) .

### <Portion Corresponding to General Flow (4), (5), and (6)>

In S14 described above, when disapproval is received by the reception unit 25 from the user (No in S14), the change unit 26 shifts to S24 described above.

In S17 described above, when the related schedule information includes a schedule other than those of the user (No in S17), the solution determination unit 23 requests another user related to the related schedule to change the schedule (S18). This is performed by contacting the terminal device 102 of the corresponding other user. Then, when all the other users have approved the request (Yes in S19), the solution determination unit 23 moves the processing to S15 described above. When the other users include the user who has not approved the request (No in S19), the solution determination unit 23 determines whether or not the other user who has not approved the request can be excluded from adjustment targets when consideration is given to the priority of the user (S21) . When the other user can be excluded (Yes in S21), the solution determination unit 23 shifts to S15 described above. When the other user cannot be excluded (No in S21), the solution determination unit 23 notifies the user that approval could not be obtained from the member whose schedule is required to be adjusted (S22). This is performed by contacting the terminal device 102 of the corresponding user. Then, the solution determination unit 23 moves the processing to S11 described above.

Next, a description will be given of a plurality of specific examples of processing to be executed by the scheduling system 1.

### [Specific Example 1]

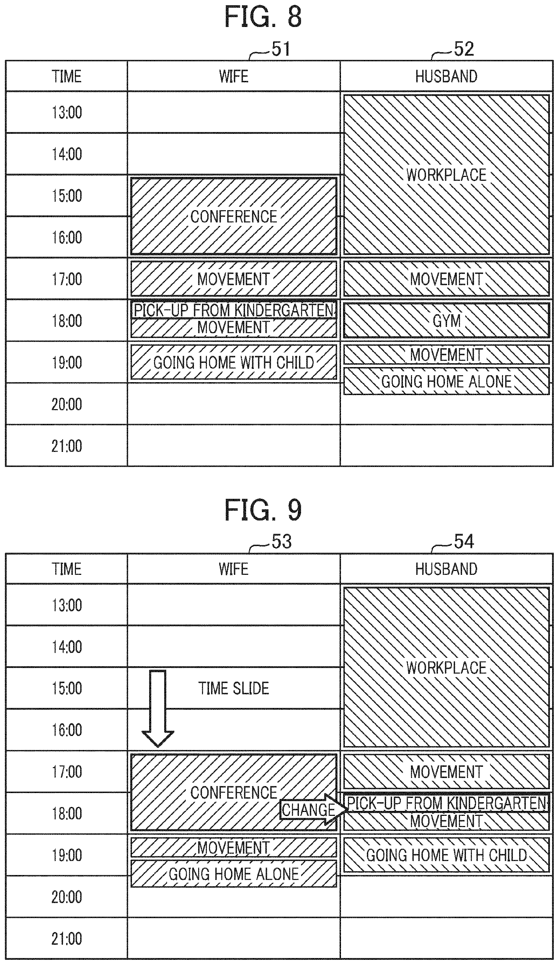

Figs. 8 and 9 are conceptual diagrams of schedule information illustrating Specific Example 1. In this case, the users of the scheduling system 1 are a wife and a husband of a family of three including the wife, the husband, and a child. In this example, a main schedule adjuster is the wife. An external factor is a change in a schedule of a "conference". Each of the wife and the husband as the users has the terminal device 102. The conceptual diagram in Fig. 8 illustrates schedule information 51 of the wife and schedule information 51 of the husband each stored in the schedule information storage unit 21 with time. The schedule information 51 of the wife and the schedule information 52 of the husband were produced by the processing in Fig. 6 or Fig. 7 and stored in advance in the schedule information storage unit 21.

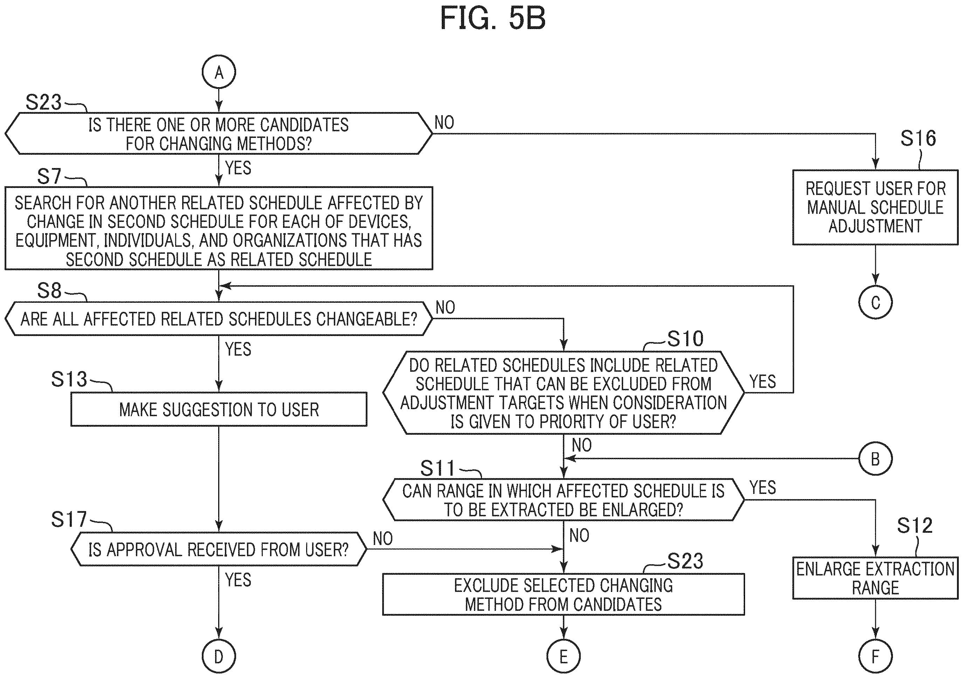

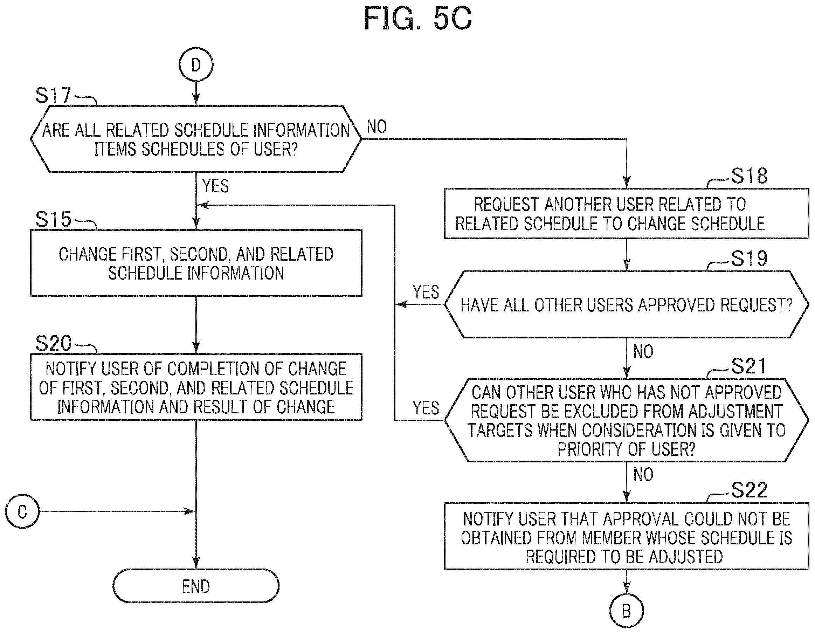

Schedule information 53 of the wife and schedule information 54 of the husband in Fig. 9 indicates schedules after the schedules in Fig. 8 were changed. First, information indicating that the schedule of the "conference" initially scheduled to be held at a work place of the wife between 15:00 and 17:00 in the schedule information 51 of the wife has a high possibility of being changed and, as a result of a time slide as shown in Fig. 9, the conference is scheduled to be held between 17:00 and 19:00 is received. The request for the change is acquired by the information acquisition unit 22 from the terminal device 102 of the wife or the like. Thus, the first schedule of the wife as the user is changed due to the external factor (Yes in S1). It may also be possible herein to estimate that a person at the company the wife is working for sets a conference to the wife based on a history of conferences or requests for data changes which have been previously stored in the schedule information storage unit 21 or using the behavior estimation unit 30 or the like, and estimate that the first schedule of the wife has a high possibility of being changed based on the information. In this case, it may also be possible to notify the wife that the possibility of a change in the first schedule of the wife is estimated to be high and request the wife to determine whether or not to proceed to subsequent processing, though not illustrated in Fig. 5. As a result of thus estimating that the time of the "conference" has been changed or has a high possibility of being changed, it is determined that execution of child "PICK-UP FROM KINDERGARTEN" scheduled at 18:00 in the schedule information 51 of the wife is impossible. It follows that, as a result of the first schedule, any of the schedules may be affected (Yes in S2).

Accordingly, the solution determination unit 23 determines whether or not the priority of "PICK-UP FROM KINDERGARTEN" as the corresponding affected schedule (second schedule) is a priority that can be changed voluntarily by the user (S4). The "PICK-UP FROM KINDERGARTEN" is the schedule of a routine daily performed by the family, and can also be performed by somebody other than the wife such as the husband. Accordingly, the priority of "PICK-UP FROM KINDERGARTEN" is preliminarily stored as a priority that can be changed voluntarily by the wife as the user in the schedule information storage unit 21 in association with "PICK-UP FROM KINDERGARTEN". Therefore, it is determined that "PICK-UP FROM KINDERGARTEN" has the changeable priority (Yes in S4), and the schedule information storage unit 21 searches for a scheduling method that can be applied to "PICK-UP FROM KINDERGARTEN" as the second schedule (S5). In this case, "PICK-UP FROM KINDERGARTEN" has been preliminarily stored as a schedule that is difficult to be subjected to cancellation, a change, or the like in the schedule information storage unit 21. However, the "PICK-UP FROM KINDERGARTEN" has preliminarily been stored as the schedule that can be carried by a substitute person in the schedule information storage unit 21. It may also be possible herein that the storage means thereof uses a priority by, e.g., preliminarily defining a table that allocates an applicable schedule changing method depending on the priority of a schedule. As the schedule information of the members of the same family, the schedule information 53 of the wife and the schedule information 54 of the husband are preliminarily stored in the schedule information storage unit 21 in association with each other. Accordingly, the solution determination unit 23 searches for such a means that, as the schedule changing method applicable to the second schedule of "PICK-UP FROM KINDERGARTEN", the "PICK-UP FROM KINDERGARTEN" is "PERFORMED" by "HUSBAND IN PLACE OF WIFE" (S5).

Then, from among the applicable changing methods, one candidate is selected based on a reference predetermined by the user (S6). The wife and the husband as the users of the scheduling system 1 have preliminarily stored, in the schedule information storage unit 21, the reference based on which a means such that, when the wife cannot perform the "PICK-UP FROM KINDERGARTEN", the husband substitutes for the wife from a viewpoint of minimum cost, personality reliability, or the like is selected first. In addition, since the means such that the husband performs "PICK-UP FROM KINDERGARTEN" in place of the wife has been retrieved (S5), in S6, the optimum service determination unit 23a of the solution determination unit 23 refers to the information described above in the schedule information storage unit 21 and selects the means such that "HUSBAND" performs the "PICK-UP FROM KINDERGARTEN IN PLACE OF WIFE" as an optimum service. Then, another related schedule that may be affected by a change in the second schedule is searched for (S7). In the schedule information 52 of the husband, the schedule of the husband to go to "GYM" at 18:00 overlapping "PICK-UP FROM KINDERGARTEN" by the wife at 18:00 in the schedule information 51 of the wife is retrieved herein as the related schedule.

Then, the schedule matching unit 23b of the solution determination unit 23 determines whether or not all the related schedules that may be affected are changeable (S8). It is preliminarily stored in the form of, e.g., priority in the schedule information storage unit 21 that the schedule of the husband to go to "GYM" is a relatively easily changeable schedule. Accordingly, it can be determined that the husband can make a schedule change by canceling his schedule to go to "GYM" and go for "PICK-UP FROM KINDERGARTEN" instead of the wife.

Then, after processing in S13, S14, S15, S17, and S20, the change unit 26 changes the first, second, and related schedule information (S15). The suggestion to the user and the reception of approval therefrom in S13 and S14 is performed on the wife. The wife is requested herein to approve the schedule changing method. When approval is not given in S14, the selected schedule changing method is removed, and another schedule changing method is reviewed (No in S14). When approval is given, in S17, it is checked whether or not, when the selected schedule changing method is implemented, all the related schedules are related to a person concerned. When all the related schedules are related to the person concerned, the processing in S15 and S20 is performed and then, in the schedule information storage unit 21, the schedule information 51 of the wife and the schedule information 52 of the husband in Fig. 8 are respectively changed to the schedule information 53 of the wife and the schedule information 54 of the husband in Fig. 9. Meanwhile, when a schedule of another user other than the person concerned is related in S17, all the related users are requested to change schedules (S18). When all the related users approve the schedule changes, the processing including S15 and S20 and subsequent to S20 is performed, and then the schedule information 53 of the wife and the schedule information 54 of the husband are updated. When the related users include the user who does not approve the schedule change, in S21, it is examined whether or not the unapproving user can be excluded from the adjustment targets when consideration is given to the priority of the schedule of the wife. When the unapproving user can be excluded, the flow advances to the processing including S15 and S20 and subsequent to S20 described above. When the unapproving user cannot be excluded, the wife is notified thereof in S22, and the flow advances to the processing in S11. Then, in S11, it is examined whether or not the range in which the affected schedule is extracted can be enlarged. When the enlargement is impossible, the processing including and subsequent to S24 is performed. When the enlargement is possible, the range is enlarged (S12), and the processing including and subsequent to S5, i.e., beginning with the search for the schedule changing methods, is performed. By repeating the foregoing processing, eventually, in the schedule information storage unit 21, the schedule information 51 of the wife and the schedule information 52 of the husband in Fig. 8 are respectively changed to the schedule information 53 of the wife and the schedule information 54 of the husband in Fig. 9.

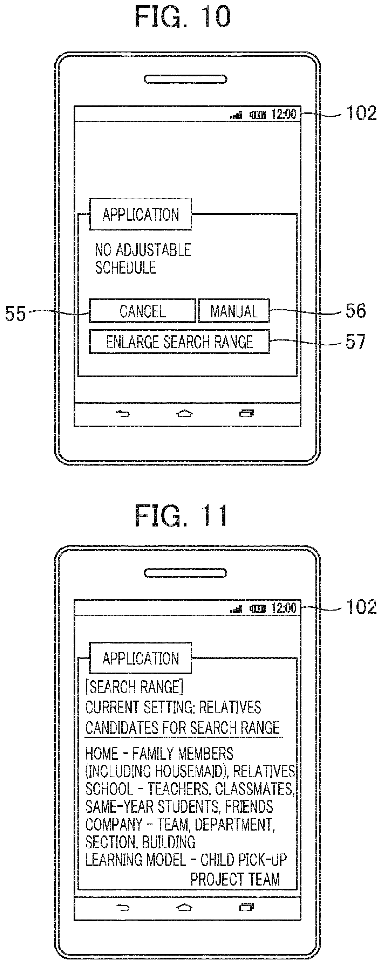

Fig. 10 illustrates an example of screen display in the terminal device 102 of the user when manual schedule adjustment is requested of the user in S16. The screen is intended to notify the user that such an adjustable schedule as described above is absent and allow the user to select a button for what to do. When the wife operates a cancellation button 55, the schedule adjustment is cancelled. When the wife operates a manual button 56, it follows that the wife operates the terminal device 102 to make manual adjustment for a schedule change. When the wife operates an enlargement button 57 for the search range, the processing including and subsequent to S12 is performed. In the flow chart in Fig. 5, when there is no candidate for the schedule changing method (No in S23), the user is requested for manual schedule adjustment (S16), but it may also be possible to perform the processing including and subsequent to S12 based on an instruction from the user at the stage in S16.

Fig. 11 illustrates an example of screen display of an example of the enlarged search range displayed when the enlargement button 57 for the search range is operated. According to the current settings, the search range includes the husband and the like but, as candidates for the enlarged search range, another family member (including a grandfather, a grandmother, or even a housemaid) other than the husband, a school, a company, and the like can be considered.

### [Specific Example 2]

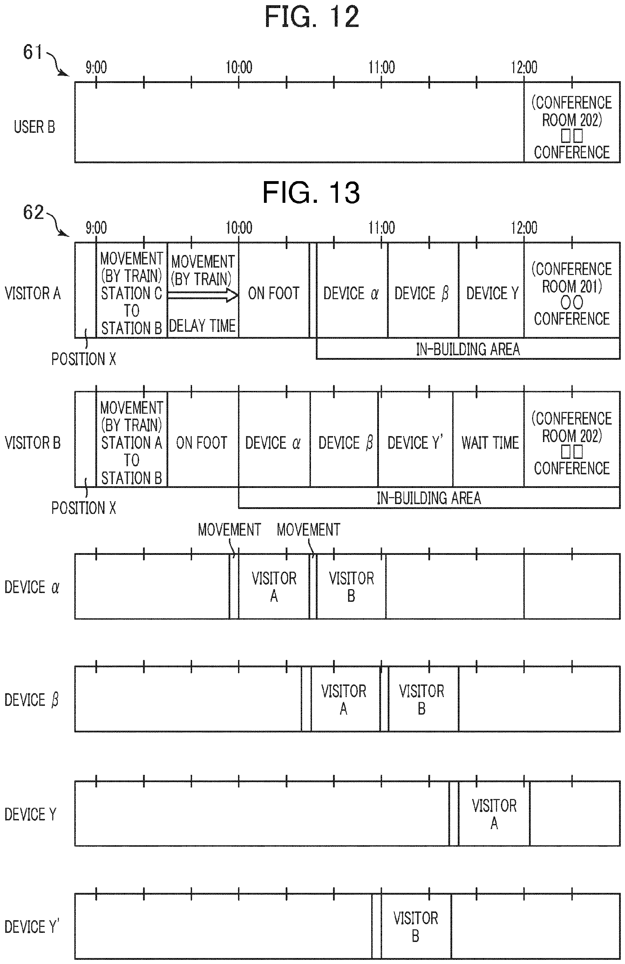

Figs. 12 and 13 are conceptual diagrams of schedule information illustrating Specific Example 2. In this example, schedules of visitors to a given office are adjusted. Users of the scheduling system 1 in this case are the office that receives the visitors and a user A, a user B, and the like serving as the visitors. A main schedule adjuster in this example is a manager of the office that receives the visitors. An external factor is a train delay.

As illustrated in schedule information 61, the user B as the user of the scheduling system 1 has preliminarily stored, as schedule information, a schedule to attend a conference in a conference room 202 of the office at 12:00 on a given day in the schedule information storage unit 21. In the office, schedules of devices such as a humanoid robot that attends visitors are also managed using the scheduling system 1. In this example, the devices include a device α, a device β, a device Y, and a device Y'. In this example, the device Y and the device Y' are of the same type.

On the day, not only the user B, but also the user A has a schedule to attend a conference in a conference room 201 of the office at 12:00. In addition, according to the schedule of the user A, the user A is expected to move by train from a station C to a station B between 9:00 and 9:30. However, due to a train delay, the user A requests a schedule change so as to ride a train until 10:00. The request is acquired by the information acquisition unit 22 from the terminal device 102 of the user A. In other words, a first schedule of the user A is changed due to the external factor (Yes in S1). The request for the schedule change via a terminal operation by the visitor A may also be replaced with such processing that, e.g., the information acquisition unit 22 acquires traffic information on the Internet, and the behavior estimation unit 30 estimates that the visitor A is also delayed based on train delay information, and reflects the delay in the scheduler for the visitor A in the schedule information storage unit 21. When arriving at the office after movement by train and on foot, the users A and B are expected to use the device α, the device β, and the device Y (device Y') before the conferences. Due to the delayed arrival of the user A at the office, a schedule with regard to in what order the device α, the device β, and the device Y (device Y') are to be used by the users A and B is affected (Yes S2).

The priority of the second schedule with regard to the use of the device α, the device β, and the device Y (device Y') can be changed voluntarily by the user (Yes in S4). In other words, the device α, the device β, and the device Y (device Y') may be used in any order by the users, and it is preliminarily recorded in the schedule information storage unit 21 that the order in which the users use the device α, the device β, and the device Y (device Y') is changeable. Here, a storage method therefor may also be, e.g., preliminary provision of a definition of a table that allocates the available users with respect to the priority of the scheduler. Then, the schedule matching unit 23b of the solution determination unit 23 searches for a schedule changing method applicable to the second schedule (S5). The schedule changing method may appropriately change the schedule such that the use of each of the device α, the device β, and the device Y (device Y') by the user A does not overlap the use of each of the device α, the device β, and the device Y (device Y') by the user B.

Then, the solution determination unit 23 selects, according to the changing method retrieved in S5, one candidate based on the reference predetermined by the office as the user (S6). The office has determined herein that the device α, the device β, and the device Y (device Y') are to be used in this order, and the determination is stored preliminarily in the schedule information storage unit 21. Accordingly, among the changing methods in which the use of each of the device α, the device β, and the device Y (device Y') by the user A does not overlap the use of each of the device α, the device β, and the device Y (device Y') by the user B, a candidate in which the device α, the device β, and the device Y (device Y') are to be used in this order by the user A and the user B is selected.

Then, the solution determination unit 23 searches for another related schedule that may be affected by a change in the second schedule (S7). The respective schedules of the device α, the device β, and the device Y (device Y') are retrieved herein. Then, the solution determination unit 23 determines whether or not all of these related schedules are changeable (S8). The schedule of each of the device α, the device β, and the device Y (device Y') can be changed unless the use thereof by the user A overlaps the use thereof by the user B. Subsequently, the processing in S13, S14, S15, S17, and S20 is performed, and then the change unit 26 changes the first, second, and related schedule information (S15). The suggestion to the user and the reception of approval therefrom in S13 and S14 is performed on the office. Additionally, in S17, as the related schedules, at least the visitor A and the visitor B are extracted. Thus, the first, second, and related schedule information is changed (S15) to result in schedule information 62 in Fig. 12. The schedule information has been adjusted so as to prevent overlapping use of the same device in the same time block and allow each of the user A and the user B to use the device α, the device β, and the device Y (device Y') in this order.

### [Specific Example 3]

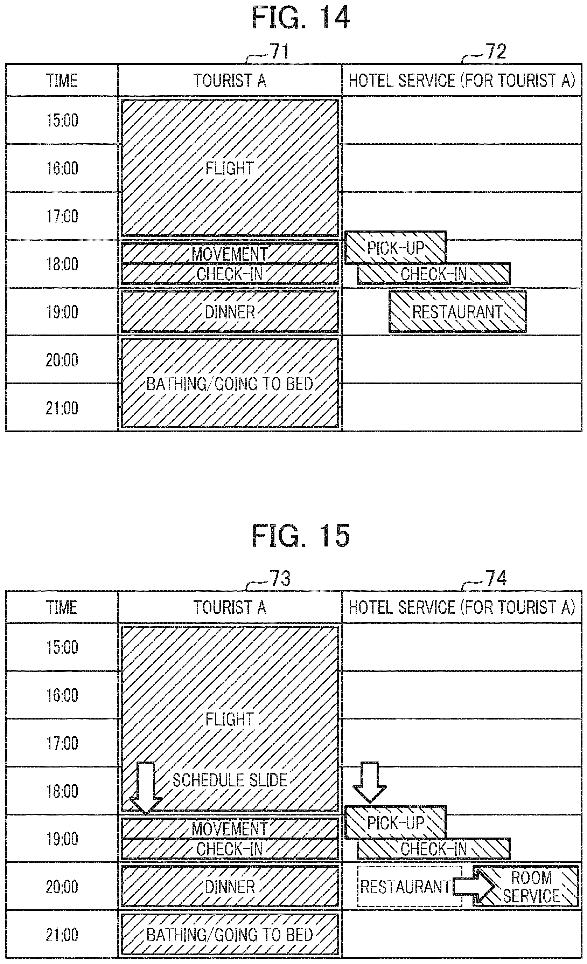

Figs. 14 and 15 are conceptual diagrams of schedule information illustrating Specific Example 3. This example is an example of schedule adjustment when a tourist has an airplane flight to a destination and stays at a hotel there. A main schedule adjuster in this example is an owner (related person) of the hotel. An external factor is a delay in the airplane "FLIGHT".

In Fig. 13, schedule information 71 of a tourist A as a user and schedule information 72 of hotel service for the tourist A at the hotel as a user are stored in the schedule information storage unit 21. In the initial schedule information 71 of the tourist A, a period between 15:00 to 18:00 is an airplane "FLIGHT" period. However, the "FLIGHT" is delayed, and a period till 17:00 corresponds to the "FLIGHT" period. A request for changed information is acquired by the information acquisition unit 22 from the terminal device 102 of the tourist A or the like. As a result, a first schedule of the tourist A, which is "FLIGHT", is changed due to the external factor (Yes in S1). The request for the schedule change made via a terminal operation by the tourist A may also be replaced with such processing that, e.g., the information acquisition unit 22 acquires traffic information on the Internet, and the behavior estimation unit 30 estimates that the tourist A is also delayed based on airplane flight delay information, and reflects the delay in the scheduler for the tourist A in the schedule information storage unit 21. As a result, consecutive schedules of "MOVEMENT", "CHECK-IN", and "DINNER" as the schedules of the tourist A after "FLIGHT" are affected (Yes in S2). The solution determination unit 23 determines whether or not the priority of the second schedule affected thereby can be changed voluntarily by the user (S4). The schedules of "MOVEMENT", "CHECK-IN", and "DINNER" are preliminarily stored as schedules that can be allowed even in the event of slight time changes in the schedule information storage unit 21, and therefore the solution determination unit 23 determines that these schedules are changeable (Yes in S4). Note that the storage means may also preliminarily provide, e.g., a definition of a table that allocates allowable time changes with respect to the priorities of the schedules or the like.

Then, the schedule matching unit 23b of the solution determination unit 23 searches for schedule changing methods applicable to "MOVEMENT", "CHECK-IN", and "DINNER" each as the second schedule (S5). As a result, as described above, it is possible to slide the schedules of "MOVEMENT", "CHECK-IN", and "DINNER" in accordance with the delayed "FLIGHT", and the changing methods are retrieved. Then, from a search result, one candidate is selected (S6), and a means of sliding and delaying the schedules of "MOVEMENT", "CHECK-IN", and "DINNER" is selected.

Then, the resource matching unit 23c of the solution determination unit 23 searches for another related schedule that may be affected by a change in the second schedule (S7). In this example, the related schedule is searched for in the schedule information 72 of the hotel service for the tourist A. In other words, due to the delayed "FLIGHT" time, a "PICK-UP" service of picking up the tourist A by car, a "CHECK-IN" service of performing a check-in procedure, and a "RESTAURANT" service of providing dinner at a hotel restaurant, which are provided by the hotel to the tourist A, are affected by the change in the second schedule. Management of these services corresponds to management of each of facilities of the hotel including the vehicles, front, and restaurant.

Then, the solution determination unit 23 determines whether or not these retrieved related schedules are changeable (S8). Each of the "PICK-UP", "CHECK-IN", and "RESTAURANT" services is stored in the schedule information storage unit 21 as a service that can be basically provided until a time determined by the hotel, and it is possible to delay a time at which service provision is started based on the delayed "FLIGHT". Here, a storage method therefor may also be, e.g., preliminary provision of a definition of a table that allocates allowable time changes with respect to the priorities of the schedules. However, with regard to the "RESTAURANT", the service cannot be provided depending on a reservation status of the hotel restaurant. Accordingly, the solution determination unit 23 accesses a server (not shown) that manages various reservation statuses at the hotel and searches to check whether or not there is an unoccupied table when a period during which the "RESTAURANT" service is to be provided is shifted by one hour. When there is no unoccupied table as a result of the search, provision of dinner by "ROOM SERVICE" instead of the "RESTAURANT" service is selected as a changeable service. Alternatively, suggesting having dinner at a restaurant outside the hotel to the tourist A may also be an option. In that case, information on restaurants which are open in a region adjacent to the hotel (types of food and a map of locations of the restaurants) is also searched for.

Subsequently, the processing in S13, S14, S15, S17, and S20 is performed, and then the change unit 26 changes the first, second, and related schedule information (S15). The suggestion to the user and the reception of approval therefrom in S13 and S14 is performed on the hotel. Additionally, in S17, at least the tourist A is extracted as the related schedule. New schedule information obtained by changing the first, second, and related schedule information is schedule information 73 of the tourist A and schedule information 74 of the hotel service for the tourist A at the hotel in Fig. 14. In this example, there is no unoccupied table and the "RESTAURANT" service cannot be provided, and therefore "ROOM SERVICE" is provided. Scheduled times of the "PICK-UP" and "CHECK-IN" services are delayed based on the delayed "FLIGHT". Note that, in this specific example, the main schedule adjustor may also be the tourist A. In other words, it may also be possible that the suggestion to the user and the reception of approval therefrom in S13 and S14 is performed on the tourist A, and at least the hotel is extracted as the related schedule in S17.

### [Specific Example 4]

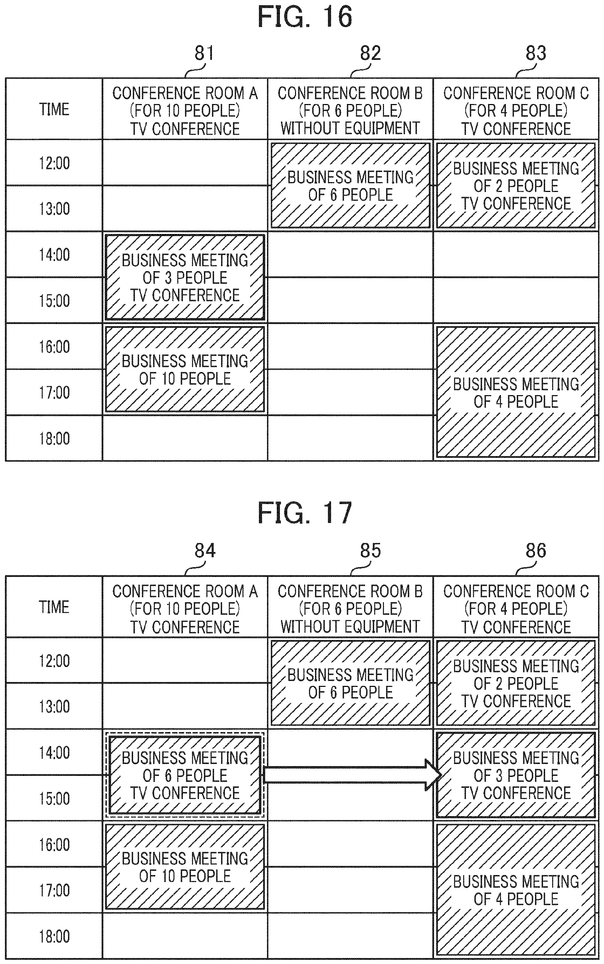

Figs. 16 and 17 are conceptual diagrams of schedule information illustrating Specific Example 4. In this example, the use of, e.g., a plurality of conference rooms as facilities of a company or the like is scheduled. In Fig. 15, use schedule information 81 of a conference room A, use schedule information 82 of a conference room B, and use schedule information 83 of a conference room C which are stored in the schedule information storage unit 21 are illustrated. The conference room A can be used by up to ten people, the conference room B can be used by up to six people, and the conference room C can be used by up to four people. In the conference room A and the conference room C, equipment for TV conferences is prepared, while the conference room B has no equipment for TV conferences. In this example, users of the scheduling system 1 are members of an organization such as the company in which the conference rooms are placed or the like. A main schedule adjuster in this example is an owner of the conference rooms or the company members. An external factor is requests to hold conferences in the same conference room in the same time block.

In the example in Fig. 15, in the use schedule information 81 of the conference room A, a schedule of three people to hold a business meeting as a TV conference between 14:00 and 16:00 has been set. Meanwhile, it is assumed that a schedule of six people to hold a business meeting as a TV conference between 14:00 and 16:00 has been newly requested by another company member. Such a request is received by the information acquisition unit 22 from the terminal device 102 of the company member who intends to hold the TV conference of six people. In this case, the TV conference of six people can be held only in the conference room A, but the conference room A already has the schedule in the same time block. Accordingly, an initial first schedule of three people to hold the business meeting as the TV conference in the conference room A between 14:00 and 16:00 is changed due to the external factor which is the business meeting of six people held in the conference room A as the TV conference between 14:00 and 16:00 (Yes in S1). It may also be possible herein to estimate that the company member sets the business meeting as the TV conference of six people in the conference room A between 14:00 and 16:00 based on a history of meetings or requests for data changes which have been previously stored in the schedule information storage unit 21 or by the behavior estimation unit 30 or the like, and estimate that the schedule of the conference room A has a high possibility of being changed based on the information. This change in the first schedule consequently affects the initial schedule of three people to hold the business meeting as the TV conference in the conference room A between 14:00 and 16:00 (Yes in S2). Accordingly, the solution determination unit 23 determines whether or not the priority of a second schedule that may be affected thereby can be voluntarily changed by the company member as the use (S4). As a result, since there is no schedule to use the conference room C in the use schedule information 83 of the conference room C in Fig. 15 and the TV conference to be used by three people can be held also in the conference room C, the solution determination unit 23 determines that such a priority is changeable (Yes in S4) .

Then, the schedule matching unit 23b of the solution determination unit 23 searches for methods for changing the initial schedule of three people to hold the business conference as the TV conference between 14:00 and 16:00, which corresponds to the second schedule (S5). As a result, as described above, the changing methods that allow the TV conference of the three people to be held also in the conference room C in the same time block are retrieved. Then, the solution determination unit 23 selects one candidate from among the applicable changing methods (S6). In this case, a plan to hold the TV conference to be used by three people in the conference room C, which is retrieved in S5, is selected.

Next, the solution determination unit 23 searches for another related schedule that may be affected by the schedule of the three people to hold the business meeting as the TV conference between 14:00 and 16:00, which corresponds to the second schedule (S7). Then, the solution determination unit 23 determines whether or not all the related schedules that may be affected are changeable (S8). When the use schedule information 83 of the conference room C is referred to, there is no schedule between 14:00 and 16:00, and accordingly it is possible to plan a schedule of three people to hold a business meeting as a TV conference between 14:00 and 16:00, which corresponds to the related schedule.

The company member who has planned the initial schedule to hold the TV conference of six people in the conference room A between 14:00 and 16:00 is persuaded to approve a schedule change using a policy as described above or a policy of such schedule adjustment by processing in S13 and S14. Additionally, by processing in S17, the company member who has suggested the schedule to hold the TV conference of three between 14:00 and 16:00 as the related schedule is extracted. Then, the change unit 26 changes the first, second, and related schedule information (S15). As a result, as illustrated in Fig. 16, the initial schedule information becomes use schedule information 84 of the conference room A, use schedule information 85 of the conference room B, and the use schedule information 86 of the conference room C which are stored in schedule information storage unit 21. A schedule change is made to result in the TV conference of six people held in the conference room A between 14:00 and 16:00, and the initial schedule to hold the TV conference of three people in the conference room A between 14:00 and 16:00 is changed to a schedule to hold the TV conference in the conference room C.

With the scheduling system 1, the scheduling program 20, and the scheduling method each described above, it is possible to acquire information having a possibility of changing of an existing schedule to predict a schedule change, produce a new schedule replacing the existing schedule, and suggest the new schedule to the user.

The schedule information initially stored in the schedule information storage unit 21 can easily be produced through estimation of at least one of a behavior of the user, an operation of the device, and a use status of the equipment by the behavior estimation unit 30 following the processing in Fig. 4 and through acquisition of the information by the schedule information storage unit 21.

In addition, in this case, the behavior estimation unit 30 can produce a schedule in an estimation result based on a previous history of the schedule information stored in the schedule information storage unit 21, and therefore the behavior estimation unit 30 can easily produce the schedule information in accordance with a tendency of the past schedule. According to the processing in Fig. 7, the schedule information can also be built by being input by the user.

Note that the present invention is not limited to the embodiment described above, and includes various modifications. For example, the above embodiment has offered a detailed description to facilitate the understanding of the present invention, and is not necessarily limited to a configuration including all the described components.

Additionally, each of the configurations, functions, processing units, processing means, and the like described above may also be implemented by hardware through designing of a part or the whole thereof with, e.g., an integrated circuit. Moreover, each of the configurations, functions, and the like described above may also be implemented by software through interpretation and execution of programs for implementing respective functions by processors. Information such as programs, tables, files, and the like for implementing the respective functions may be stored in a memory, a storage device such as a hard disc or a SSD (Solid State Drive), or stored in a storage medium such as an IC card, a SD card, or a DVD.

The control lines and information lines are illustrated to an extent that the illustration thereof is considered to be necessary in describing the present invention, and all control lines and information lines that may be required for a product are not necessarily illustrated. It may be possible to consider that, in a real situation, almost all the configurations may be connected to each other.

### List of Reference Signs

- 1: Scheduling system
- 16: Storage medium
- 20: Scheduling program
- 21: Schedule information storage unit
- 22: Information acquisition unit
- 23: Solution determination unit
- 24: Suggestion unit
- 25: Reception unit
- 26: Change unit
- 27: Schedule information production unit
- 28: Input schedule information reception unit
- 29: Schedule information recording unit
- 32: Behavior estimation arithmetic device
- 30: Behavior estimation unit
- 31: Constant function updating unit
- 23a: Optimum service determination unit
- 23b: Schedule matching unit
- 23c: Resource matching unit

## Claims

1. A scheduling system comprising:
a schedule information storage unit that stores at least one schedule information item among a user, a device, and equipment;
an information acquisition unit that acquires information indicating that a schedule of at least one of the user, the device, and the equipment stored in the schedule information storage unit has a possibility of being changed in future;
a solution determination unit that extracts, when the information is acquired by the information acquisition unit, a problem caused by a future change in the schedule, refers to the schedule information for the schedule of at least one of the user, the device, and the equipment which is to serve as a related party related to a solution to solve the problem, and determines a solution to successfully cope with the problem by changing the schedule of the related party;
a suggestion unit that suggests, to the user serving as the related party, the determination made by the solution determination unit;
a reception unit that receives, from the user, approval of the suggestion made by the suggestion unit; and
a change unit that changes, when the approval is received by the reception unit, the schedule information based on the solution.

2. The scheduling system according to claim 1, further comprising:
a behavior estimation unit that estimates at least one of a behavior of the user, an operation of the device, and a use status of the equipment;
a schedule information production unit that acquires a result of the estimation and produces the schedule information to be stored in the schedule information storage unit; and
a schedule information recording unit that records, in the schedule information storage unit, the schedule information received from the schedule information production unit.

3. The scheduling system according to claim 1, further comprising:
an input schedule information reception unit that receives the schedule information input thereto from the user to be stored in the schedule information storage unit; and
a schedule information recording unit that records, in the schedule information storage unit, the schedule information received from the input schedule information reception unit.

4. The scheduling system according to claim 2, wherein the behavior estimation unit estimates at least one of the behavior of the user, the operation of the device, and a market status of the equipment based on a previous history of the schedule information stored in the schedule information storage unit.

5. The scheduling system according to claim 2, further comprising:
a constant function updating unit that regularly updates a function of at least one of the behavior estimation unit and the solution determination unit.

6. A scheduling program for causing a computer to execute:
an information acquisition process of acquiring information indicating that a schedule of at least one of a user, a device, and equipment stored in a schedule information storage unit storing at least one schedule information item among the user, the device, and the equipment has a possibility of being changed in future;
a solution determination process of extracting, when the information is acquired in the information acquisition process, a problem caused by a future change in the schedule, referring to the schedule information for the schedule of at least one of the user, the device, and the equipment which is to serve as a related party related to a solution to solve the problem, and determining a solution to successfully cope with the problem by changing the schedule of the related party;
a suggestion process of suggesting, to the user serving as the related party, the determination made in the solution determination process;
a reception process of receiving, from the user, approval of the suggestion made in the suggestion process; and
a change process of changing, when the approval is received in the reception process, the schedule information based on the solution.

7. The scheduling program according to claim 6, which causes the computer to further execute:
a behavior estimation process of estimating at least one of a behavior of the user, an operation of the device, and a use status of the equipment;
a schedule information production process of acquiring a result of the estimation and producing the schedule information to be stored in the schedule information storage unit; and
a schedule information recording process of recording, in the schedule information storage unit, the schedule information produced in the schedule information production process.

8. The scheduling program according to claim 6, which causes the computer to further execute:
an input schedule information reception process of receiving the schedule information input thereto from the user to be stored in the schedule information storage unit; and
a schedule information recording process of recording, as the schedule information, the schedule information received in the input schedule information reception process.

9. The scheduling program according to claim 7, wherein the behavior estimation process includes estimating at least one of the behavior of the user, the operation of the device, and the use status of the equipment based on a previous history of the schedule information stored in the schedule information storage unit.

10. The scheduling program according to claim 7, wherein a constant function updating process of regularly updating a function is performed on at least one of the behavior estimation process and the solution determination process.

11. A scheduling method comprising:
an information acquisition step of acquiring information indicating that a schedule of at least one of a user, a device, and equipment stored in a schedule information storage unit storing at least one schedule information item among the user, the device, and the equipment has a possibility of being changed in future;
a solution determination step of extracting, when the information is acquired in the information acquisition step, a problem caused by a future change in the schedule, referring to the schedule information for the schedule of at least one of the user, the device, and the equipment which is to serve as a related party related to a solution to solve the problem, and determining a solution to successfully cope with the problem by changing the schedule of the related party;
a suggestion step of suggesting, to the user serving as the related party, the determination made in the solution determination step;
a reception step of receiving, from the user, approval of the suggestion made in the suggestion step; and
a change step of changing, when the approval is received in the reception step, the schedule information stored in the schedule information storage unit based on the solution.

12. The scheduling method according to claim 11, further comprising:
a behavior estimation step of estimating at least one of a behavior of the user, an operation of the device, and a use status of the equipment;
a schedule information production step of acquiring a result of the estimation and producing the schedule information to be stored in the schedule information storage unit; and
a schedule information recording step of recording, in the schedule information storage unit, the schedule information produced in the schedule information production step.

13. The scheduling method according to claim 11, further comprising:
an input schedule information reception step of receiving the schedule information input thereto from the user to be stored in the schedule information storage unit; and
a schedule information recording step of recording, in the schedule information storage unit, the schedule information received in the input schedule information reception step.

14. The scheduling method according to claim 12, wherein the behavior estimation step includes estimating at least one of the behavior of the user, the operation of the device, and the use status of the equipment based on a previous history of the schedule information stored in the schedule information storage unit.

15. The scheduling method according to claim 12, wherein a constant function updating step of regularly updating a function is performed on at least one of the behavior estimation step and the solution determination step.

16. A computer readable storage medium storing a scheduling program for causing a computer to execute:
an information acquisition process of acquiring information indicating that a schedule of at least one of a user, a device, and equipment stored in a schedule information storage unit storing at least one schedule information item among the user, the device, and the equipment has a possibility of being changed in future;
a solution determination process of extracting, when the information is acquired in the information acquisition process, a problem caused by a future change in the schedule, referring to the schedule information for the schedule of at least one of the user, the device, and the equipment which is to serve as a related party related to a solution to solve the problem, and determining a solution to successfully cope with the problem by changing the schedule of the related party;
a suggestion process of suggesting, to the user serving as the related party, the determination made in the solution determination process;
a reception process of receiving, from the user, approval of the suggestion made in the suggestion process; and
a change process of changing, when the approval is received in the reception process, the schedule information based on the solution.

17. The storage medium according to claim 16, wherein the scheduling program causes the computer to further execute:
a behavior estimation process of estimating at least one of a behavior of the user, an operation of the device, and a use status of the equipment;
a schedule information production process of acquiring a result of the estimation and producing the schedule information to be stored in the schedule information storage unit; and
a schedule information recording process of recording, in the schedule information storage unit, the schedule information produced in the schedule information production process.

18. The storage medium according to claim 16, wherein the scheduling program causes the computer to further execute:
an input schedule information reception process of receiving the schedule information input thereto from the user to be stored in the schedule information storage unit; and
a schedule information recording process of recording, as the schedule information, the schedule information received in the input schedule information reception process.

19. The storage medium according to claim 17, wherein the behavior estimation process of the scheduling program includes estimating at least one of the behavior of the user, the operation of the device, and the use status of the equipment based on a previous history of the schedule information stored in the schedule information storage unit.

20. The storage medium according to claim 17, wherein the scheduling program performs a constant function updating process of regularly updating a function on at least one of the behavior estimation process and the solution determination process.
